# EUROPEAN PATENT APPLICATION

(11) **EP 2 525 203 A1**
(43) Date of publication of application: **21.11.2012**
(21) Application number: 10843204.8
(22) Date of filing: 28.12.2010
(51) Int. Cl.: G01M 3/04, F28F 27/00

(54) **METHOD FOR DETECTING ABNORMALITY IN HEAT-EXCHANGE PROCESS, AND HEAT EXCHANGER**

(30) Priority: 13.01.2010 JP 2010004812
(71) Applicant: Sumitomo Chemical Company, Limited, Tokyo 104-8260 (JP)
(72) Inventor: MARUNO, Shinobu, Niihama-shi Ehime 792-0025 (JP); ETO, Isao, Niihama-shi Ehime 792-0025 (JP); KOWHAKUL, Wasana, Fukuoka-shi Fukuoka 814-0144 (JP)
(74) Representative: Jackson, Martin Peter
(86) International application number: PCT/JP2010/073711
(87) International publication number: WO 2011/086852

(57) **Abstract**

A method of sensing an abnormal condition in a heat exchange process, capable of promptly sensing leakage of a process fluid in a process of heat exchange between a heat medium and a process fluid, is provided. With attention being paid in a process of heat exchange between a heat medium which is fused salt including nitrate and/or nitrite and a process fluid including secondary alcohols and/or a dehydrated product thereof to generation of a large amount of hydrogen gas resulting from contact between the leaked process fluid and the heat medium, the present invention is directed to a method of sensing an abnormal condition in a heat exchange process having a sensing step of sensing a hydrogen gas in a vapor phase portion in a flow path for the heat medium.

## Description

### TECHNICAL FIELD

The present invention relates to a method of sensing an abnormal condition in a process of heat exchange between a heat medium and a process fluid and a heat exchange apparatus of which abnormal condition is sensed with the method of sensing an abnormal condition.

### BACKGROUND ART

In a heat exchange process, fused salt, water, or the like is employed as a heat medium, and a temperature of a process fluid is adjusted to a prescribed temperature as a result of heat exchange between this heat medium and the process fluid. For example, fused salt which is a mixture such as sodium nitrite and potassium nitrate has such properties as (1) excellent heat conduction capability, (2) high chemical stability even at a high temperature, and (3) ease in temperature control. Therefore, fused salt has been used as a high temperature heat medium for heating or cooling various process fluids.

During the heat exchange process, a process fluid may leak due to corrosion or the like of a pipe. Therefore, in order to sense leakage of a process fluid, various methods have been studied. For example, Japanese Patent Laying-Open No. 2003-83833 (PTL 1) has proposed a method of sensing a gas component (nitrogen oxide) generated at the time when a leaked process fluid reacts to a heat medium, in a vapor phase portion in a flow path for the heat medium.

### CITATION LIST

### PATENT LITERATURE

PTL 1: Japanese Patent Laying-Open No. 2003-83833

### SUMMARY OF INVENTION

### TECHNICAL PROBLEM

In a case where secondary alcohols are employed as a process fluid, however, an amount of generated nitrogen oxide originating from reaction to fused salt representing the heat medium is small. Then, with the method of sensing nitrogen oxide, it takes time until an abnormal condition can be sensed after leakage of the process fluid, and at the time point when an abnormal condition is sensed, the heat medium and the process fluid or the like have already been well mixed, and there has been a possibility of occurrence of a secondary disaster such as explosion.

It is an object of the present invention is to provide a method of sensing an abnormal condition in a heat exchange process, capable of promptly sensing leakage of a process fluid in a process of heat exchange between a heat medium and a process fluid in the case where the process fluid includes secondary alcohols or a dehydrated product thereof. In addition, it is also an object to provide a heat exchange apparatus of which abnormal condition is sensed with such a method of sensing an abnormal condition.

### SOLUTION TO PROBLEM

The present inventors have conducted dedicated studies for solving the problems above, and consequently paid attention to the fact that a large amount of hydrogen gas is generated as a result of contact and reaction between a leaked process fluid and a heat medium in a heat exchange process for heat exchange between the heat medium and the process fluid (including secondary alcohols and/or a dehydrated product thereof). Then, the present inventors have found new facts that leakage of a process fluid can promptly be sensed by sensing this hydrogen gas in a vapor phase portion in a flow path for the heat medium, and completed the present invention.

Namely, the present invention provides a method of sensing an abnormal condition in a heat exchange process for heat exchange between a heat medium which is fused salt including nitrate and/or nitrite and a process fluid which is secondary alcohols and/or a dehydrated product thereof, and the method has a sensing step of sensing a hydrogen gas generated as a result of contact between the process fluid and the heat medium, in a vapor phase portion in a flow path for the heat medium.

In the method of sensing an abnormal condition according to the present invention described above, preferably, the fused salt includes nitrate and 20 to 90 weight % of nitrite and has a melting point from 100 to 200°C.

In addition, the present invention provides a heat exchange apparatus including a process fluid flow path through which a process fluid including secondary alcohols and/or a dehydrated product thereof flows, a heat medium flow path through which a heat medium which is fused salt including nitrate and/or nitrite flows, a heat exchanger for heat exchange between the process fluid and the heat medium, and a hydrogen gas sensor for sensing a hydrogen gas generated as a result of contact between the process fluid and the heat medium, the hydrogen gas sensor being provided in a vapor phase portion in the heat medium flow path.

It is noted that the "heat exchange process" in the present invention is a concept encompassing also a dehydration process of alcohol.

### ADVANTAGEOUS EFFECTS OF INVENTION

According to the method of sensing an abnormal condition in a heat exchange process or the heat exchange apparatus in the present invention, in a heat exchange process for heat exchange between a heat medium and a process fluid (including secondary alcohols and/or a dehydrated product thereof), leakage of a process fluid can promptly and readily be sensed by sensing a hydrogen gas generated as a result of reaction between leaked secondary alcohols and/or a dehydrated product thereof and a heat medium.

### BRIEF DESCRIPTION OF DRAWINGS

Fig. 1 is a schematic diagram showing one embodiment of a heat exchange apparatus according to the present invention.
Fig. 2 is a schematic diagram showing a test apparatus used in a verification test according to the present invention.

### DESCRIPTION OF EMBODIMENTS

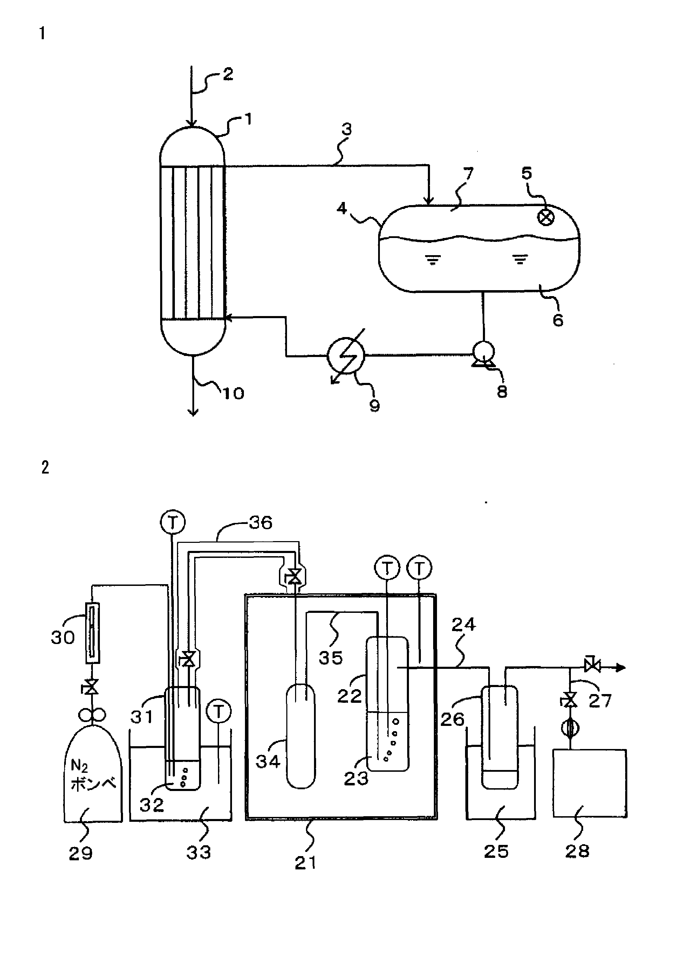

The present invention will be described hereinafter in detail with reference to the drawings. Fig. 1 is a schematic diagram showing one embodiment of a heat exchange apparatus according to the present invention. In the heat exchange apparatus shown in Fig. 1, an abnormal condition of leakage of a process fluid is sensed with the method of sensing an abnormal condition according to the present invention.

The heat exchange apparatus shown in Fig. 1 includes a process fluid flow path through which a process fluid including secondary alcohols and/or a dehydrated product thereof flows, a heat medium flow path through which a heat medium which is fused salt including nitrate and/or nitrite flows, a heat exchanger 1 for heat exchange between the process fluid and the heat medium, and a hydrogen gas sensor 5 for sensing a hydrogen gas generated as a result of contact between the process fluid and the heat medium.

The process fluid flow path is not particularly restricted so long as a process fluid flows therethrough. The process fluid is supplied to heat exchanger 1 through a pipe 2 and discharged through a pipe 10 after heat exchange in heat exchanger 1. In the present embodiment, the process fluid flow path means a flow path through which a process fluid flows (pipes 2, 10, a conduit in heat exchanger 1) and a flow path branched therefrom (for example, a circulating path, a vent line). The heat medium flow path is not particularly restricted so long as a heat medium flows therethrough. In the present embodiment, the heat medium flow path means a flow path including heat exchanger 1, a pipe 3, a heat medium tank 4, a pump 8, a cooler and heater 9, and a filter, a flow path in equipment associated therewith, and a flow path branched therefrom (for example, a circulating path, a vent line). The hydrogen gas sensor should only be provided in a vapor phase portion in the heat medium flow path. In the present embodiment, hydrogen gas sensor 5 is provided in a vapor phase portion 7 in heat medium tank 4.

In the heat exchange apparatus shown in Fig. 1, when a hydrogen gas generated as a result of flow of the process fluid (secondary alcohols or a dehydrated product thereof, to be understood hereinafter) into the heat medium due to corrosion or the like of a pipe in heat exchanger 1 and contact of the process fluid with the heat medium is sent to heat medium tank 4 through pipe 3 together with the heat medium, hydrogen gas sensor 5 provided in vapor phase portion 7 for sensing this hydrogen gas promptly senses leakage of the process fluid. Namely, in the heat exchange apparatus shown in Fig. 1, a sensing step of sensing with hydrogen gas sensor 5, a hydrogen gas generated as a result of leakage of the process fluid and contact of the process fluid with the heat medium is performed, so that an abnormal condition in the heat exchange process is sensed.

Heat exchanger 1 is not particularly limited so long as heat exchange between a process fluid and a heat medium is achieved with a partition wall such as a pipe or a flat plate being interposed, and for example, a shell-and-tube cylindrical heat exchanger, a plate-type heat exchanger, a spiral heat exchanger, a block heat exchanger, or the like representing a bulkhead heat exchanger can be employed. The heat exchanger includes not only a heat exchanger simply for heat exchange but also a reactor such as a multi-tubular catalytic packed reactor for heat exchange and reaction.

As described above, fused salt is employed as the heat medium. As this fused salt, a composition containing 20 to 90 weight % of sodium nitrite (NaNO₂) having a melting point in a range approximately from 100 to 200°C is preferred. In the case where a composition composed of NaNO₂, sodium nitrate (NaNO₃), and potassium nitrate (KNO₃) is employed as fused salt, fused salt containing these components in ranges from 20 to 50 weight %, from 5 to 15 weight %, and from 45 to 65 weight %, respectively, is exemplified. Alternatively, in the case where a composition composed of NaNO₂ and KNO₃ is employed as fused salt, fused salt containing these components in ranges from 20 to 90 weight % and from 80 to 10 weight %, respectively, is exemplified. Specifically, for example, a composition composed of NaNO₂ (40 weight %), NaNO₃ (7 weight %), and KNO₃ (53 weight %) (having a melting point of 142°C), a composition composed of NaNO₂ (34 weight %), NaNO₃ (13 weight %), and KNO₃ (53 weight %) (having a melting point of 152°C), a composition composed of NaNO₂ (50 weight %) and KNO₃ (50 weight %) (having a melting point of 139°C), and the like are exemplified. In order to lower a freezing point of these fused salts and facilitate temperature control, water may be added for use.

The process fluid includes secondary alcohols and/or a dehydrated product thereof. If this process fluid flows into the heat medium flow path, the leaked process fluid and the heat medium come in contact with each other and react to each other, to thereby generate a hydrogen gas. The vapor phase portion in the heat medium flow path senses the hydrogen gas.

As the process fluid, for example, a process fluid including methylcyclohexyl carbinol (MCC) representing a secondary alcohol or cyclohexyl ethylene (CHE) representing a dehydrated product thereof, and the like are exemplified. In addition, as the process fluid, for example, a process fluid including 4-methyl-2-pentanol representing a secondary alcohol or 4-methyl-2-pentene representing a dehydrated product thereof, and the like are exemplified. These process fluids react to fused salt and generate a hydrogen gas.

A dehydration process (one type of a heat exchange process) in which fused salt containing NaNO₂ is employed as the heat medium, MCC is employed as the process fluid, and CHE is generated by dehydrating this MCC will be described hereinafter in detail.

Namely, MCC is introduced in heat exchanger 1 (reactor) through pipe 2, heat exchange between MCC and fused salt approximately from 300 to 400°C is carried out in heat exchanger 1, CHE is generated from MCC as a result of dehydration through vapor phase reaction, and CHE is sent through pipe 10 to a next step.

Fused salt that has completed heat exchange with the process fluid is discharged from heat exchanger 1 and sent to heat medium tank 4 through pipe 3. A prescribed amount of fused salt is stored in this heat medium tank 4, and heat medium tank 4 is constituted of a liquid phase portion 6 (fused salt) and vapor phase portion 7. Fused salt in liquid phase portion 6 is sent by pump 8 to cooler and heater 9 for cooling and/or heating this fused salt, cooled or heated, and thereafter again supplied to heat exchanger 1.

When a crack or the like is produced due to stress or corrosion in the process fluid flow path (partition wall) in heat exchanger 1 during the heat exchange process and the process fluid containing MCC and/or CHE leaks into the flow path for fused salt, a hydrogen gas is particularly noticeably generated.

By having the sensing step of sensing generation of this hydrogen gas with hydrogen gas sensor 5 provided in vapor phase portion 7, leakage of the process fluid is sensed in an early stage. Thus, an interlock can be activated so that supply of the process fluid and fused salt into heat exchanger 1 is stopped and damage can be prevented from expanding.

Though a catalytic combustion type hydrogen sensor can be employed as hydrogen gas sensor 5, the hydrogen gas sensor is not limited thereto and various hydrogen sensors can be adopted.

### Example

A verification test for verifying that the method of sensing an abnormal condition according to the present invention is effective was conducted in the following.

Fig. 2 shows a schematic diagram of an overall test apparatus used in the verification test. With the use of this test apparatus, a gas generated at the time when fused salt containing NaNO₂ and a process fluid containing MCC or CHE were mixed was evaluated.

In the test apparatus shown in Fig. 2, a thermostatic bath 21 contains a stainless steel vessel 22 for evaluating risk of mixture of fused salt and an introduced gas, fused salt 23 placed in stainless steel vessel 22, a supply pipe 35 for supplying an introduced gas including an MCC gas or a CHE gas to fused salt 23 within vessel 22, and a fused salt collection vessel 34 for preventing fused salt 23 from flowing back to upstream of the apparatus. A pipe 24 for collecting an exhaust gas is attached to stainless steel vessel 22. The exhaust gas is cooled in a glass vessel 26 immersed in a cooler 25 and a part thereof is collected in a fluoroplastic sampling bag 28 through a pipe 27.

The introduced gas is prepared by bubbling an N₂ gas supplied from an N₂ cylinder 29 into a glass vessel 31 containing a process fluid 32 (MCC or CHE) heated in an oil bath 33. In addition, by heating a pipe between glass vessel 31 and fused salt collection vessel 34 to a temperature not lower than a boiling point of MCC or CHE by using a ribbon heater 36, the introduced gas can be prevented from condensing in the pipe. A flow rate of a gas from N₂ cylinder 29 is adjusted by a gas flowmeter 30. It is noted that T represents a temperature sensor in Fig. 2.

Tests 1 to 6 were conducted in the following procedures by using the test apparatus as above. It is noted that, in Tests 1, 3, and 5, the following procedure (1) was not performed but the test started from a procedure (2).
(1) Ten grams of fused salt (NaNO₂: 40 weight %, NaNO₃: 7 weight %, KNO₃: 53 weight %) were loaded in 150 ml stainless steel vessel 22.
(2) Stainless steel vessel 22 was placed in thermostatic bath 21 and heated to an isothermal temperature of 380°C.
(3) After fused salt reached a prescribed temperature, a line from N₂ cylinder 29 to pipe 27 through which an exhaust gas passed was substituted with a nitrogen gas.
(4) A gas mixture of MCC and nitrogen (Tests 3, 4), a gas mixture of CHE and nitrogen (Tests 5, 6), or nitrogen alone (Tests 1, 2) was supplied to stainless steel vessel 22 at a flow rate of approximately 2000 mL/min.
(5) A gas generated as a result of supply of the gas mixture of MCC and nitrogen, the gas mixture of CHE and nitrogen, or nitrogen alone was collected in fluoroplastic sampling bag 28 for a prescribed period of time.
(6) Of the collected exhaust gas, an NOₓ gas was measured with ion chromatography and other gases were measured with gas chromatography, and volumetric composition of the exhaust gas was examined. Table 1 shows test results.

**Table 1**

| | Amount of Loaded Fused Salt [g] | Type of Fed Gas | Composition of Exhaust Gas [Vol %] | | | |
|---|---|---|---|---|---|---|
| | | | H₂ | CO | CO₂ | NOₓ |
| Test 1 | 0 | Nitrogen | <0.1 | 0.0009 | 0.043 | 0.0033 |
| Test 2 | 10 | Nitrogen | <0.1 | 0.0003 | 0.034 | 0.019 |
| Test 3 | 0 | Nitrogen, MCC | 0.3 | 0.0046 | 0.05 | 0.010 |
| Test 4 | 10 | Nitrogen, MCC | 1.4 | 0.032 | 0.36 | 0.044 |
| Test 5 | 0 | Nitrogen, CHE | 5.3 | 0.036 | 0.37 | 0.0010 |
| Test 6 | 10 | Nitrogen, CHE | 13.7 | 0.028 | 0.20 | 0.024 |

As shown in Table 1, it was found from Test 1 conducted for comparison (where no fused salt was loaded but nitrogen alone was fed) that hydrogen (H₂), carbon monoxide (CO), carbon dioxide (CO₂), and nitrogen oxide (NOₓ) could be regarded as not existing in the test apparatus. It was found that, in Test 2, fused salt was heated to 380°C in stainless steel vessel 22, increase in NOₓ was observed as compared with Test 1, and hence fused salt locally decomposed at that temperature. In Test 3, MCC was heated to 380°C in stainless steel vessel 22, and H₂, CO, and NOₓ increased as compared with Test 1. Therefore, it was found that, under such conditions, MCC locally decomposed.

In Test 4, heating to 380°C was carried out while MCC and fused salt were in contact with each other in stainless steel vessel 22, and as compared with Tests 2, 3, H₂, CO, CO₂, and NOₓ increased. Since a large amount of hydrogen gas in particular was generated, it was found that a hydrogen gas was effective as a gas to be sensed, for sensing contact of a process fluid with fused salt. In Test 5, CHE was heated to 380°C in stainless steel vessel 22, and as compared with Test 1, H₂, CO, and CO₂ increased. Therefore, it was found that, under such conditions, CHE locally decomposed. In Test 6, heating to 380°C was carried out while CHE and fused salt were in contact with each other in stainless steel vessel 22, and as compared with Tests 2, 5, H₂ and NOₓ increased. Since a large amount of hydrogen gas in particular was generated, it was found that a hydrogen gas was effective as a gas to be sensed, for sensing contact of a process fluid with fused salt.

### REFERENCE SIGNS LIST

1 heat exchanger; 2 pipe; 3 pipe; 4 heat medium tank; 5 hydrogen gas sensor; 6 liquid phase portion; 7 vapor phase portion; 8 pump; 9 cooler and heater; 10 pipe; 21 thermostatic bath; 22 stainless steel vessel; 23 fused salt; 24 pipe; 25 cooler; 26 glass vessel; 27 pipe; 28 fluoroplastic sampling bag; 29 N₂ cylinder; 30 gas flowmeter; 31 glass vessel; 32 process fluid (MCC or CHE); 33 oil bath; 34 fused salt collection vessel; 35 supply pipe; and 36 ribbon heater.

## Claims

1. A method of sensing an abnormal condition in a heat exchange process for heat exchange between a heat medium which is fused salt including nitrate and/or nitrite and a process fluid including secondary alcohols and/or a dehydrated product thereof, comprising:
a sensing step of sensing a hydrogen gas generated as a result of contact between said process fluid and said heat medium, in a vapor phase portion in a flow path for said heat medium.

2. The method of sensing an abnormal condition in a heat exchange process according to claim 1, wherein
said fused salt includes said nitrate and 20 to 90 weight % of said nitrite and has a melting point from 100 to 200°C.

3. A heat exchange apparatus, comprising:
a process fluid flow path through which a process fluid including secondary alcohols and/or a dehydrated product thereof flows;
a heat medium flow path through which a heat medium which is fused salt including nitrate and/or nitrite flows;
a heat exchanger for heat exchange between said process fluid and said heat medium; and
a hydrogen gas sensor for sensing a hydrogen gas generated as a result of contact between said process fluid and said heat medium,
said hydrogen gas sensor being provided in a vapor phase portion in said heat medium flow path.
